# EUROPÄISCHE PATENTSCHRIFT

(11) **EP 3 718 265 B1**
(45) Veröffentlichungstag und Bekanntmachung des Hinweises auf die Patenterteilung: **19.08.2026**
(21) Anmeldenummer: 18782710.0
(22) Anmeldetag: 02.10.2018
(51) Int. Cl.: H04L 12/40

(54) **ANBINDUNGSVORRICHTUNG FÜR EINEN DATENAUSTAUSCH ZWISCHEN EINEM FELDBUSNETZWERK UND EINER CLOUD**
INTERFACE APPARATUS FOR A DATA INTERCHANGE BETWEEN A FIELD BUS NETWORK AND A CLOUD
DISPOSITIF DE RACCORDEMENT POUR UN ÉCHANGE DE DONNÉES ENTRE UN RÉSEAU DE BUS DE TERRAIN ET UN NUAGE

(30) Priorität: 27.11.2017 DE 102017127903
(43) Veröffentlichungstag der Anmeldung: 07.10.2020
(73) Patentinhaber: Endress+Hauser Process Solutions AG, 4153 Reinach (CH)
(72) Erfinder: MAYER, Michael, 4104 Oberwil (CH); PÖSCHMANN, Axel, 4057 Basel (CH); MANEVAL, Michael, 79650 Schopfheim (DE)
(74) Vertreter: Endress + Hauser Group Services (Deutschland) AG+Co. KG
(86) Internationale Anmeldenummer: PCT/EP2018/076833
(87) Internationale Veröffentlichungsnummer: WO 2019/101408

(56) Entgegenhaltungen:
- CN-A- 107 357 660
- US-A1- 2013 211 546
- US-A1- 2017 272 316
- ANONYMOUS: "Transmission Control Protocol - Wikipedia", 26 November 2017 (2017-11-26), XP055895408, Retrieved from the Internet <URL:https://en.wikipedia.org/w/index.php?title=Transmission_Control_Protocol&oldid=812104119> [retrieved on 20220224]

## Beschreibung

Die Erfindung betrifft eine Anbindungsvorrichtung zur Abwicklung eines Datenaustauschs zwischen einem Feldbusnetzwerk und einer Cloud sowie ein Feldbusnetzwerk mit einer Anbindungsvorrichtung. Darüber hinaus betrifft die Erfindung ein Verfahren zur Übermittlung von Aufrufen von Cloud-Diensten von einem Feldbusnetzwerk an eine Cloud.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Protokollierung, Dokumentation und späteren Auswertung der innerhalb eines Feldbusnetzwerks anfallenden Daten können das Feldbusnetzwerk bzw. einzelne Feldgeräte des Feldbusnetzwerks mit einem Zugang zu einer Cloud ausgestattet sein. Auf diese Weise können ausgewählte Parameter der Feldgeräte sowie beispielsweise Daten zur Überwachung des Gerätezustands in die Cloud geschrieben werden. Dabei ist es auch möglich, einzelne Parameter in festgelegten zeitlichen Abständen vom jeweiligen Feldgerät abzufragen und in die Cloud zu schreiben.

Weiterer Stand der Technik ist in der US 2013/211546 A1, CN 107 357 660 A und der US 2017/272316 A1 offenbart.

Aufgabe der Erfindung ist es, eine Anbindungsvorrichtung für einen Datenaustausch zwischen einem Feldbusnetzwerk und einer Cloud bereitzustellen, die die Datenübertragung von Geräten des Feldbusnetzwerks über die Anbindungsvorrichtung zur Cloud vereinfacht.

Gelöst wird diese Aufgabe durch die in den Ansprüchen 1, 12 und 15 angegebenen Merkmale.

Vorteilhafte Weiterentwicklungen der Erfindung sind in den Unteransprüchen angegeben.

Eine Anbindungsvorrichtung entsprechend den Ausführungsformen der Erfindung dient zur Abwicklung eines Datenaustauschs zwischen einem Feldbusnetzwerk und einer Cloud. Die Anbindungsvorrichtung umfasst eine erste Schnittstelle, über die die Anbindungsvorrichtung mit mindestens einer Feldbuskomponente des Feldbusnetzwerks verbindbar ist, und eine zweite Schnittstelle, über die die Anbindungsvorrichtung mit der Cloud verbindbar ist. Die erste Schnittstelle ist als eine der Programmierschnittstelle der Cloud entsprechende Schnittstelle ausgebildet, wobei eine Schnittstellendefinition der ersten Schnittstelle mit einer Schnittstellendefinition der Programmierschnittstelle der Cloud übereinstimmt. Die Anbindungsvorrichtung ist dazu ausgelegt, einen über die erste Schnittstelle von einer Feldbuskomponente des Feldbusnetzwerks empfangenen Aufruf eines Cloud-Diensts in einen an die Cloud adressierten Aufruf eines Cloud-Diensts umzusetzen und über die zweite Schnittstelle an die Cloud zu übermitteln.

Die Anbindungsvorrichtung ist dazu ausgelegt, für die Feldbuskomponenten des Feldbusnetzwerks den Datenaustausch mit der Cloud abzuwickeln. Um auf einen Cloud-Dienst zuzugreifen, schickt eine Feldbuskomponente einen Aufruf des Cloud-Diensts an die Anbindungsvorrichtung. Die Anbindungsvorrichtung empfängt den Aufruf über die erste Schnittstelle, setzt den Aufruf in einen an die Cloud adressierten Aufruf um und übermittelt den Aufruf über die zweite Schnittstelle an die Cloud.

Dabei entspricht die erste Schnittstelle der Anbindungsvorrichtung, an die die Feldbuskomponenten die Aufrufe von Cloud-Diensten schicken, der Programmierschnittstelle der Cloud, die auch als API (Application Programming Interface) der Cloud bezeichnet wird. Insofern stellt die Anbindungsvorrichtung innerhalb des Feldbusnetzwerks eine lokale Kopie der Programmierschnittstelle der Cloud zur Verfügung, an die Aufrufe von Cloud-Diensten genau in derselben Weise gerichtet werden können, wie dies bei der eigentlichen Programmierschnittstelle der Cloud erforderlich wäre. Beispielsweise sind über die Programmierschnittstelle der Cloud und über die von der Anbindungsvorrichtung bereitgestellte lokale Kopie dieser Programmierschnittstelle die Cloud-Dienste in Form von Webservices aufrufbar. Die Schnittstellendefinition der ersten Schnittstelle stimmt mit der Schnittstellendefinition der Programmierschnittstelle der Cloud überein. Für eine Netzwerkkomponente ist die erste Schnittstelle in genau derselben Weise und mit derselben Syntax ansprechbar wie die eigentliche Programmierschnittstelle der Cloud. Insofern unterscheiden sich Aufrufe von Cloud-Diensten, die an die erste Schnittstelle der Anbindungsvorrichtung gerichtet werden, bezüglich Format und Syntax nicht von direkt an die Cloud gerichteten Aufrufen von Cloud-Diensten. Die an die Anbindungsvorrichtung gerichteten Aufrufe von Cloud-Diensten werden an die Adresse der Anbindungsvorrichtung gesendet, wohingegen die direkt an die Cloud gerichteten Aufrufe von Cloud-Diensten an die Adresse der Cloud geschickt werden. Die an die Anbindungsvorrichtung gerichteten Aufrufe von Cloud-Diensten unterscheiden sich also in der Zieladresse von den direkt an die Cloud gerichteten Aufrufen von Cloud-Diensten.

Indem die Anbindungsvorrichtung eine erste Schnittstelle bereitstellt, die genau mit der Programmierschnittstelle der Cloud übereinstimmt, wird auf Seiten der Netzwerkkomponenten die Erzeugung der jeweils benötigten Aufrufe von Cloud-Diensten vereinfacht. Auf Seiten einer Feldbuskomponente des Feldbusnetzwerks wird für die Erzeugung der Aufrufe von Cloud-Diensten lediglich ein einziger Protokollstack benötigt, unabhängig davon, ob der Aufruf direkt an die Cloud oder an eine Anbindungsvorrichtung gerichtet wird. Dies hat den Vorteil, dass der mit der Wartung und Aktualisierung der Protokollstacks verbundene Aufwand reduziert wird. Außerdem wird die Konfiguration der Netzwerkkomponenten vereinfacht. Beispielsweise kann auf Seiten einer Feldbuskomponente ein für das Ansprechen von Webservices ausgelegter HTTP- oder HTTPS-Protokollstack vorgesehen sein, mit dem wahlweise an die Cloud direkt adressierte Aufrufe von Webservices oder an die Anbindungsvorrichtung adressierte Aufrufe von Webservices erzeugt werden können.

Durch die Anbindungsvorrichtung wird ermöglicht, den gesamten Datenaustausch zwischen den Feldbuskomponenten und der Cloud über die Anbindungsvorrichtung abzuwickeln. Anstatt eine Vielzahl von Datenverbindungen zwischen den Feldbuskomponenten und der Cloud aufzubauen, wird lediglich eine Datenverbindung zwischen der Anbindungsvorrichtung und der Cloud aufgesetzt. Dies ist insbesondere unter dem Gesichtspunkt der IT-Sicherheit von Vorteil, weil die Überwachung dieser einen Datenverbindung beispielsweise mittels einer Firewall deutlich weniger administrativen Aufwand erfordert als die Überwachung einer Vielzahl einzelner Datenverbindungen. Durch die Bündelung des Datenverkehrs zur Cloud über eine Anbindungsvorrichtung wird die IT-Sicherheit verbessert, wobei sich der Aufwand für Wartung und Aktualisierung der IT-Sicherheitsstrukturen verringert. Insbesondere ist es nicht mehr erforderlich, für jedes neue Gerät im Feldbusnetzwerk ein Update der Sicherheitseinstellungen durchführen zu müssen.

Ein Feldbusnetzwerk entsprechend den Ausführungsformen der Erfindung umfasst einen Feldbus, mindestens eine an den Feldbus angeschlossene Feldbuskomponente sowie mindestens eine Anbindungsvorrichtung wie oben beschrieben zur Abwicklung eines Datenaustauschs mit einer Cloud. Bei einem derartigen Feldbusnetzwerk wird der gesamte Datenaustausch mit der Cloud zentral über die Anbindungsvorrichtung abgewickelt.

Ein Verfahren entsprechend den Ausführungsformen der Erfindung dient zur Übermittlung von Aufrufen von Cloud-Diensten von einem Feldbusnetzwerk an eine Cloud. Das Feldbusnetzwerk umfasst einen Feldbus, mindestens eine an den Feldbus angeschlossene Feldbuskomponente sowie eine Anbindungsvorrichtung. Die Anbindungsvorrichtung umfasst eine erste Schnittstelle, über die die Anbindungsvorrichtung mit mindestens einer Feldbuskomponente des Feldbusnetzwerks verbindbar ist, und eine zweite Schnittstelle zur Verbindung mit der Cloud, wobei die erste Schnittstelle als eine der Programmierschnittstelle der Cloud entsprechende Schnittstelle ausgebildet ist und wobei eine Schnittstellendefinition der ersten Schnittstelle mit einer Schnittstellendefinition der Programmierschnittstelle der Cloud übereinstimmt. Das Verfahren umfasst Empfangen eines von einer Feldbuskomponente an die Anbindungsvorrichtung gesendeten Aufrufs eines Cloud-Diensts durch die Anbindungsvorrichtung über die erste Schnittstelle, Umsetzen des über die erste Schnittstelle empfangenen Aufrufs eines Cloud-Diensts durch die Anbindungsvorrichtung in einen an die Cloud adressierten Aufruf eines Cloud-Diensts und Übermitteln des Aufrufs eines Cloud-Diensts über die zweite Schnittstelle an die Cloud.

Nachfolgend ist die Erfindung anhand von in der Zeichnung dargestellten Ausführungsbeispielen näher erläutert. Es zeigen:
Figur 1 eine Messstation, die über eine drahtlose Datenverbindung an eine Cloud angebunden ist;
Figur 2 ein Feldbusnetzwerk mit einem Anbindungsgerät für eine zentralisierte Datenübertragung zwischen dem Feldbusnetzwerk und der Cloud;
Figur 3 eine Datenübertragung zwischen einem Feldgerät und dem Anbindungsgerät, wobei die Protokollstacks auf Seiten dieser Geräte dargestellt sind;
Figur 4 eine detaillierte Darstellung des Datenaustauschs zwischen einer Feldbuskomponente, dem Anbindungsgerät und der Cloud; und
Figur 5 eine kaskadierte Anordnung von mehreren Anbindungsgeräten.

Sowohl bei einzelnen Messstationen mit nur einem Feldgerät als auch bei Feldbusnetzwerken mit einer größeren Anzahl von Feldgeräten besteht das Bedürfnis, Parameterwerte und Messwerte der Feldgeräte in eine Cloud zu schreiben. Die in die Cloud geschriebenen Daten können beispielsweise zur Funktionsüberwachung, Qualitätsdokumentation sowie zur Diagnose des Gerätezustands verwendet werden.

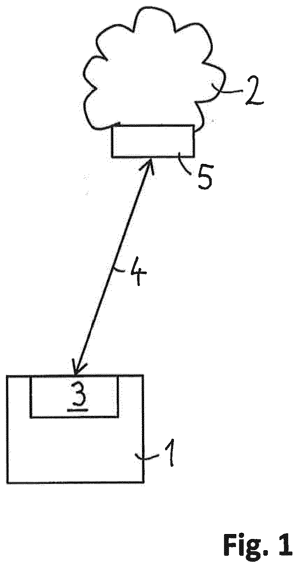

In Figur 1 ist dargestellt, wie für ein einzelnes Feldgerät 1 eine Anbindung an eine Cloud 2 realisiert werden kann. Hierzu ist auf dem Feldgerät 1 ein Cloud-Client 3 installiert. Der Cloud-Client 3 kann beispielsweise über eine drahtlose Datenverbindung 4 auf die Programmierschnittstelle 5 der Cloud 2 zugreifen. Die Programmierschnittstelle 5 der Cloud 2 wird auch als "Cloud Server API" bezeichnet, wobei die Abkürzung "API" ein "Application Programming Interface" bezeichnet. Insbesondere kann der Cloud-Client 3 über die drahtlose Datenverbindung 4 und die Programmierschnittstelle 5 Cloud-Dienste aufrufen, welche von der Cloud 2 in Form von Webdiensten bereitgestellt werden. Beispielsweise kann der Cloud-Client 3 über die drahtlose Datenverbindung 4 auf die Cloud 2 zugreifen und mittels hierfür vorgesehener Datenbankoperationen einen Eintrag zum Feldgerät 1 in der Cloud 2 anlegen, auslesen, ändern oder löschen. Bei der drahtlosen Datenverbindung 4 kann es sich beispielsweise um eine Kommunikationsverbindung gemäß einem der Mobilfunk-Standards GSM, 3G, 4G oder LTE oder um eine andere drahtlose Datenübertragungsverbindung wie z. B. WLAN handeln.

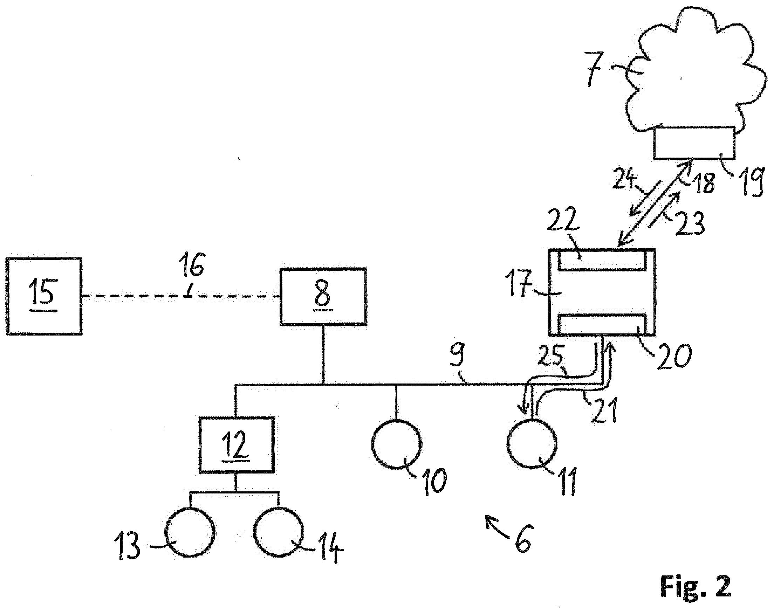

In Figur 2 ist die Anbindung eines Feldbusnetzwerks 6 an eine Cloud 7 gezeigt. Das Feldbusnetzwerk 6 umfasst ein Feldzugangsgerät 8, einen Feldbus 9 sowie zwei an dem Feldbus 9 angeschlossene Feldgeräte 10 und 11. An den Feldbus 9 ist darüber hinaus ein Gatewaygerät 12 angeschlossen, mit dem zwei weitere Feldgeräte 13 und 14 verbunden sind. Zur Parametrierung und Konfigurierung der verschiedenen Komponenten des Feldbusnetzwerks 6 kann von einem Host 15 aus über die Datenverbindung 16 und das Feldzugangsgerät 8 auf Komponenten des Feldbusnetzwerks 6 zugegriffen werden.

Die verschiedenen Feldgeräte, Gatewaygeräte und sonstigen Komponenten des Feldbusnetzwerks 6 können darüber hinaus mit der Cloud 7 Daten austauschen. In der Cloud 7 kann zu einer bestimmten Komponente des Feldbusnetzwerks 6 ein zugehöriger Eintrag angelegt werden, der der jeweiligen Komponente zugeordnet ist. In diesen Eintrag können beispielsweise Parameterwerte der Komponente gespeichert werden. Der Eintrag in der Cloud 7 kann anhand einer für die Komponente charakteristischen Kennung identifiziert werden, wobei als Kennung beispielsweise Hersteller und Seriennummer der Komponente verwendet werden können. Alternativ kann als Kennung beispielsweise eine UUID (Universally Unique Identifier) einer Komponente oder eine MAC-Adresse (Media-Access-Control-Adresse) der Netzwerkkarte einer Komponente oder eine eindeutige Kennung der SIM-Karte (Subscriber Identity Module) einer Komponente verwendet werden. Der Benutzer identifiziert sich gegenüber der Cloud 7 mittels Benutzername und Kennwort und kann dann auf die von der Cloud 7 bereitgestellten Webdienste zugreifen. Insbesondere kann der Benutzer über die Programmierschnittstelle 19 der Cloud 7 auf Einträge zu den jeweiligen Feldbuskomponenten zugreifen.

Zur Anbindung der verschiedenen Feldgeräte, Gatewaygeräte und sonstigen Komponenten des Feldbusnetzwerks 6 an die Cloud 7 könnte beispielsweise vorgesehen sein, dass jede Komponente ähnlich wie bei dem in Figur 1 gezeigten Fall eine separate Verbindung zur Cloud 7 aufbaut. Hierzu wäre es jedoch erforderlich, den Aufbau einer Vielzahl von parallelen Verbindungen zur Cloud 7 zuzulassen. Angesichts der Sicherheitsstandards in Industrial Ethernet-Netzwerken würde dies jedoch erfordern, jede dieser Datenverbindungen durch eine Firewall zu kontrollieren und zu autorisieren, was einen erheblichen Administrationsaufwand verursacht. Daher ist es bevorzugt, die Kommunikation der verschiedenen Feldgeräte, Gatewaygeräte und sonstigen Komponenten des Feldbusnetzwerks 6 mit der Cloud 7 über ein einziges zentrales Anbindungsgerät 17 abzuwickeln. In Figur 2 ist ein derartiges Anbindungsgerät 17 gezeigt, das an den Feldbus 9 angeschlossen ist, wobei der Datenaustausch mit der Cloud 7 über eine Datenverbindung 18 erfolgt. Der gesamte Datenverkehr zwischen dem Feldbusnetzwerk 6 und der Cloud 7 wird über eine einzige Datenverbindung 18 abgewickelt. Dies hat den Vorteil, dass der Datenverkehr zwischen dem Feldbusnetzwerk 6 und der Cloud 7 auf einfache Weise durch die Firewall kontrolliert werden kann.

Der Zugriff auf die Cloud 7 erfolgt über eine Programmierschnittstelle 19 der Cloud 7, welche auch als "Cloud Server API" bezeichnet wird. Über die Programmierschnittstelle 19 der Cloud 7 kann auf die von der Cloud 7 bereitgestellten Datenbankdienste zugegriffen werden. Dabei kann auf die von der Cloud 7 bereitgestellten Datenbankdienste insbesondere mittels der als CRUD-Operationen bekannten Datenbankoperationen zugegriffen werden, wobei das Akronym "CRUD" für "Create, Read, Update, Delete" steht. Die CRUD-Operationen umfassen das Anlegen ("Create") eines Eintrags in der Cloud 7, das Auslesen ("Read") eines Eintrags, das Aktualisieren ("Update") eines Eintrags sowie das Löschen ("Delete") eines Eintrags in der Cloud 7. Darüber hinaus können die Cloud-Dienste aber auch andere anders strukturierte oder zusätzliche Cloud-Dienste umfassen. Gemäß der Schnittstellendefinition der Programmierschnittstelle 19 der Cloud 7 kann auf jeden der von der Cloud 7 bereitgestellten Dienste mit einem Aufruf von definierter Syntax und Semantik zugegriffen werden.

Für die Datenübertragung von einer Feldbuskomponente zum Anbindungsgerät war es bisher erforderlich, auf Seiten der Feldbuskomponente jeweils zwei Protokollstacks bereitzustellen, nämlich einen ersten Protokollstack für die direkte Datenübertragung von der Feldbuskomponente über das Internet zur Cloud und zusätzlich einen zweiten Protokollstack für die Datenübertragung von der Feldbuskomponente zu einem Anbindungsgerät. Beispielsweise war für die direkte Datenübermittlung über das Internet zur Cloud ein HTTP- oder HTTPS-Protokollstack auf der Feldbuskomponente vorgesehen. Dagegen wurde die Datenübertragung von der Feldbuskomponente zum Anbindungsgerät beispielsweise über den Feldbus abgewickelt, wobei hierfür beispielsweise ein Protokollstack für ein Feldbusprotokoll vorgesehen war. Es war also notwendig, zur Datenübermittlung von der Feldbuskomponente zum Anbindungsgerät auf der Feldbuskomponente einen separaten zusätzlichen Protokollstack vorzusehen, der die Kommunikation zwischen der Feldbuskomponente und dem Anbindungsgerät abwickelte. Die Wartung und Aktualisierung von zwei separaten Protokollstacks verursachte angesichts der Vielzahl von unterschiedlichen Hardware- und Softwareversionen jedoch hohen Aufwand.

Bei der vorliegenden Erfindung wird ein anderer Ansatz verfolgt, um Daten von einer Komponente des Feldbusnetzwerks 6 über das Anbindungsgerät 17 in die Cloud 7 zu schreiben. Gemäß der vorliegenden Erfindung wird auf Seiten des Feldbusnetzwerks 6 durch das Anbindungsgerät 17 eine lokale Programmierschnittstelle 20 bereitgestellt, die eine genaue Kopie der Programmierschnittstelle 19 der Cloud 7 darstellt und dieselben Cloud-Dienste wie die eigentliche Programmierschnittstelle 19 der Cloud 7 bereitstellt. Da die lokale Programmierschnittstelle 20 dieselben Webdienste wie die originale Programmierschnittstelle 19 der Cloud 7 bereitstellt, kann von einer Feldbuskomponente aus ein Zugriff auf die lokale Programmierschnittstelle 20 auf dieselbe Weise durchgeführt werden wie ein Zugriff auf die eigentliche Programmierschnittstelle 19, wobei lediglich eine andere Zieladresse verwendet wird. Insbesondere kann auf Seiten der Feldbuskomponente für den Zugriff auf die lokale Programmierschnittstelle 20 und auf die Programmierschnittstelle 19 derselbe Protokollstack verwendet werden, beispielsweise ein HTTP- oder HTTPS-Protokollstack. Die Schnittstellendefinition der lokalen Programmierschnittstelle 20 des Anbindungsgeräts 17 stimmt dabei exakt mit der Schnittstellendefinition der Programmierschnittstelle 19 der Cloud 7 überein, so dass das Aufrufen der verfügbaren Cloud-Dienste bei der lokalen Programmierschnittstelle 20 des Anbindungsgeräts 17 gemäß derselben Syntax und Semantik wie das Aufrufen der Webdienste über die Programmierschnittstelle 19 erfolgt.

Um auf einen der angebotenen Cloud-Dienste zuzugreifen, kann nun beispielsweise das Feldgerät 11 mittels eines auf dem Feldgerät 11 implementierten Protokollstacks einen Aufruf des gewünschten Cloud-Dienstes erzeugen. Der so erzeugte Aufruf wird dann zu der lokalen Programmierschnittstelle 20 des Anbindungsgeräts 17 übermittelt, wie dies in Figur 2 durch den Pfeil 21 veranschaulicht ist. Vorzugsweise wird der Aufruf des Cloud-Diensts über den Feldbus 9 vom Feldgerät 11 zur Programmierschnittstelle 20 übermittelt. Dabei kann die Datenübertragung zwischen dem Feldgerät 11 und der Programmierschnittstelle 20 über den Feldbus 9 beispielsweise mittels Ethernet-Paketen erfolgen. Anstelle einer Übertragung mittels Ethernet-Paketen käme auch eine Übertragung über ATM-Datenpakete oder über eine andere physikalische Schicht in Betracht. Alternativ dazu könnten zwischen dem Feldgerät 11 und gegebenenfalls weiteren Feldbuskomponenten einerseits und dem Anbindungsgerät 17 andererseits jeweils zusätzliche Datenverbindungen vorgesehen oder herstellbar sein, über die der Aufruf eines Cloud-Diensts vom Feldgerät 11 zum Anbindungsgerät 17 übermittelt werden kann. Beispielsweise könnte zwischen dem Feldgerät 11 und dem Anbindungsgerät 17 eine drahtlose Kommunikationsverbindung wie beispielsweise eine WLAN-Verbindung oder eine Mobilfunkverbindung vorgesehen oder herstellbar sein, über die Aufrufe von Cloud-Diensten vom Feldgerät 11 zum Anbindungsgerät 17 übermittelt werden können.

Auf Seiten des Anbindungsgeräts 17 wird dieser Aufruf eines Cloud-Dienstes empfangen. Wenn es sich bei dem vom Feldgerät 11 zum Anbindungsgerät 17 übermittelten Aufruf um einen gemäß der Schnittstellendefinition gültigen Aufruf eines Cloud-Dienstes handelt, wird der Aufruf vom Anbindungsgerät 17 weiter verarbeitet. Hierzu übersetzt das Anbindungsgerät 17 den Aufruf eines Cloud-Diensts in einen an die Cloud 7 adressierten Aufruf eines Cloud-Diensts. Als neue Zieladresse des bisher an das Anbindungsgerät 17 adressierten Aufrufs eines Cloud-Diensts wird die Adresse der Cloud 7 angegeben. Am Anbindungsgerät 17 ist eine Cloud-Client-Schnittstelle 22 für den Datenaustausch mit der Cloud 7 vorgesehen. Das Anbindungsgerät 17 übermittelt den Aufruf des Cloud-Diensts über die Cloud-Client-Schnittstelle 22 und die Datenverbindung 18 zur Programmierschnittstelle 19 der Cloud 7, wie dies in Figur 2 durch den Pfeil 23 dargestellt ist. Auf Seiten der Cloud 7 wird der vom Anbindungsgerät 17 erhaltene Aufruf verarbeitet. Der aufgerufene Cloud-Dienst wird ausgeführt und der Eintrag zum Feldgerät 11, der vorzugsweise über Hersteller und Seriennummer des Feldgeräts 11 identifiziert wird, wird gemäß dem empfangenen Aufruf angelegt, ausgelesen, geändert oder gelöscht.

In umgekehrter Richtung können von der Cloud 7 aus Daten und Nachrichten zum Anbindungsgerät 17 und von dort weiter zur jeweiligen Feldbuskomponente übermittelt werden. Beispielsweise können eine Bestätigung eines erhaltenen Aufrufs oder Daten eines ausgelesenen Eintrags von der Programmierschnittstelle 19 der Cloud 7 aus über die Datenverbindung 18 zur Cloud-Client-Schnittstelle 22 des Anbindungsgeräts 17 übermittelt werden, wie dies in Figur 2 durch den Pfeil 24 dargestellt ist. Bei Bedarf können die empfangenen Daten und Nachrichten vom Anbindungsgerät 17 aus weiter über die Programmierschnittstelle 20 und den Feldbus 9 zur jeweiligen Feldbuskomponente, beispielsweise zum Feldgerät 11, übermittelt werden, wie dies in Figur 2 durch den Pfeil 25 dargestellt ist.

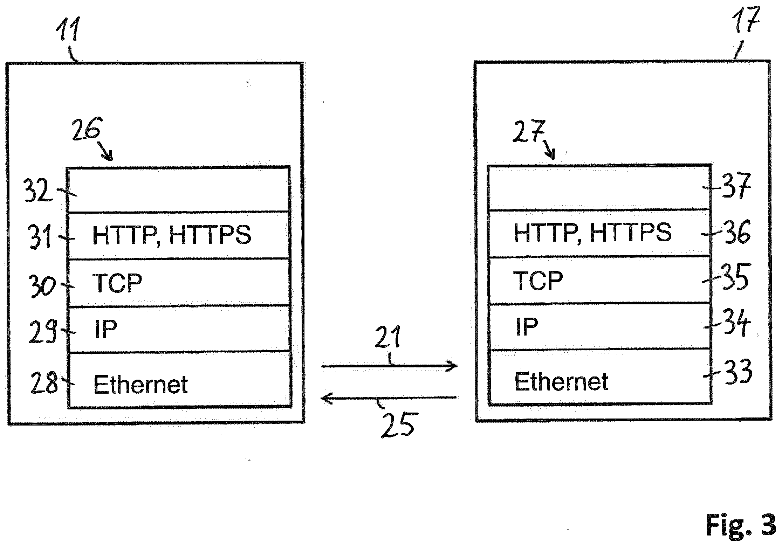

In Figur 3 ist gezeigt, wie Datenverkehr, der an die Cloud 7 übermittelt werden soll, vom Feldgerät 11 zum Anbindungsgerät 17 übertragen wird und wie in umgekehrter Richtung von der Cloud 7 empfangene Nachrichten und Daten vom Anbindungsgerät 17 zum Feldgerät 11 übermittelt werden. Auf Seiten des Feldgeräts 11 ist ein Protokollstack 26 vorgesehen und auf dem Anbindungsgerät 17 ist ein entsprechender Protokollstack 27 implementiert. Vorzugsweise handelt es sich bei den Protokollstacks 26, 27 um HTTP- bzw. HTTPS-Protokollstacks.

Mittels des Protokollstacks 26 kann ein Aufruf einer Datenbankoperation erzeugt werden, die dann gemäß dem Pfeil 21 zum Anbindungsgerät 17 übertragen wird. Der Protokollstack 26 umfasst eine Ethernet-Schicht 28, eine IP-Schicht 29, eine TCP-Schicht 30 sowie eine darauf aufsetzende HTTP- oder HTTPS-Schicht 31. Oberhalb der HTTP- bzw. HTTPS-Schicht 31 ist eine anwendungsspezifische Schicht 32 implementiert, die zum Aufrufen der Cloud-Dienste vorgesehen ist. In dieser anwendungsspezifischen Schicht 32 sind die bereits erwähnten CRUD-Operationen, also die für das Ansprechen der Cloud-Dienste benötigten Datenbankoperationen definiert. Mittels der CRUD-Operationen können Einträge in der Cloud 7 angelegt, ausgelesen, modifiziert oder gelöscht werden. Vorzugsweise werden für die CRUD-Operationen in der anwendungsspezifischen Schicht 32 HTTP-eigene Befehle wie GET und POST weiterverwendet. Darüber hinaus sind in der anwendungsspezifischen Schicht 32 Datenobjekte definiert, die beim Zugriff auf Einträge der Cloud 7 benötigt werden, insbesondere beispielsweise Datenobjekte zu Assets, Herstellern und Gerätetypen sowie Verknüpfungen zwischen diesen Datenobjekten. Neben den grundlegenden Datenbankoperationen und den Datenobjekten kann in der anwendungsspezifischen Schicht 32 mindestens ein Ablaufschema spezifiziert sein, das eine Abfolge von Operationen angibt, die beim Zugriff auf Cloud-Dienste eingehalten werden muss. So kann beispielsweise vorgesehen sein, dass vor dem Anlegen eines neuen Eintrags zu einer Feldbuskomponente geprüft werden muss, ob es zu dieser Feldbuskomponente bereits einen Eintrag in der Cloud gibt. Erst wenn entsprechend diesem Ablaufschema geprüft wurde, dass ein derartiger Eintrag noch nicht existiert, kann im nächsten Schritt der gewünschte Eintrag angelegt werden.

Der auf Seiten des Anbindungsgeräts 17 vorgesehene Protokollstack 27 ist vorzugsweise ebenfalls als HTTP- oder HTTPS-Protokollstack ausgelegt und entspricht dem auf Seiten des Feldgeräts 11 vorgesehenen Protokollstack 26. Der Protokollstack 27 umfasst eine Ethernet-Schicht 33, eine IP-Schicht 34, eine TCP-Schicht 35 und eine HTTP- bzw. HTTPS-Schicht 36. Oberhalb der HTTP- bzw. HTTPS-Schicht 36 ist eine anwendungsspezifische Schicht 37 vorgesehen, die dazu ausgelegt ist, einen empfangenen Aufruf eines Cloud-Dienstes zu dekodieren und zu überprüfen. Hierzu werden innerhalb der anwendungsspezifischen Schicht 37 genau wie in der entsprechenden Schicht 32 des Feldgeräts 11 die für das Ansprechen der Cloud-Dienste benötigten CRUD-Operationen spezifiziert, außerdem werden die verwendeten Datenobjekte festgelegt. Auch das mindestens eine Ablaufschema, das eine beim Aufruf von Cloud-Diensten einzuhaltende Abfolge von Operationen beschreibt, kann in der anwendungsspezifischen Schicht 37 definiert werden.

Ein vom Feldgerät 11 empfangener Aufruf eines Cloud-Dienstes wird durch den Protokollstack 27 dekodiert. Dabei wird durch die anwendungsspezifische Schicht 37 überprüft, ob es sich um einen gültigen Aufruf einer Datenbankoperation handelt, ob die im Aufruf spezifizierten Objekte sowie deren Verknüpfungen definiert sind und ob ein vorgegebenes Ablaufschema eingehalten ist. Wenn es sich bei dem empfangenen Aufruf eines Cloud-Dienstes nicht um einen gültigen Aufruf handelt, wird der Aufruf verworfen oder es wird eine Fehlermeldung ausgegeben. Wenn der Aufruf des Cloud-Dienstes dagegen gültig ist, dann setzt das Anbindungsgerät 17 diesen Aufruf in einen an die Cloud 7 adressierten Aufruf eines Cloud-Dienstes um und übermittelt diesen Aufruf an die Cloud 7. In umgekehrter Richtung empfängt das Anbindungsgerät 17 von der Cloud 7 Nachrichten und Daten, die durch den Protokollstack 27 in an das Feldgerät 11 adressierte Datenpakete umgewandelt und entsprechend dem Pfeil 25 zum Feldgerät 11 übertragen werden. Auf Seiten des Feldgeräts 11 werden die von der Cloud 7 empfangenen Nachrichten und Daten durch den Protokollstack 26 dekodiert.

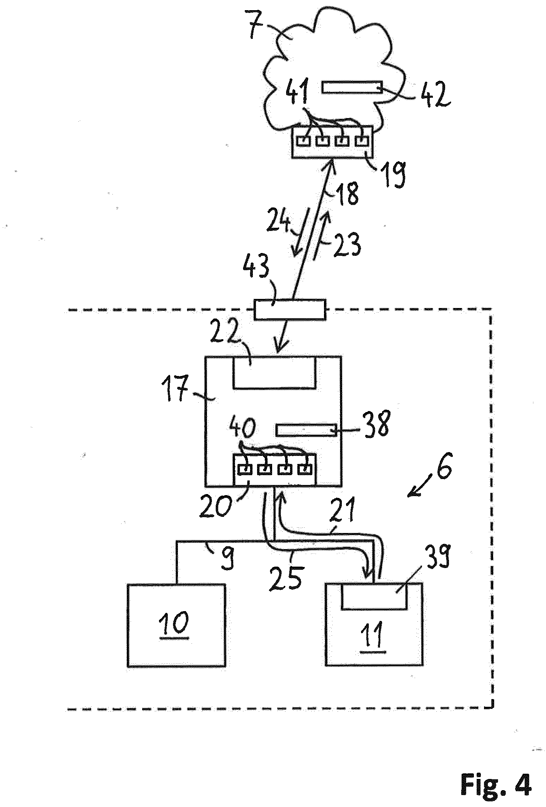

In Figur 4 ist der Kommunikationsablauf detailliert dargestellt. Dabei soll angenommen werden, dass vom Feldgerät 11 aus der zugehörige Eintrag in der Cloud 7 aktualisiert werden soll, wobei zu dem bereits existierenden Eintrag noch weitere Parameterwerte hinzugefügt werden sollen. Hierzu erstellt das Feldgerät 11 einen Aufruf des für die Aktualisierung eines Eintrags zuständigen Cloud-Dienstes, wobei als IP-Adresse dieses Aufrufs die IP-Adresse 38 des Anbindungsgeräts 17 spezifiziert wird. Alternativ dazu könnte der Aufruf des Cloud-Diensts auch an einen Domainnamen des Anbindungsgeräts 17 adressiert sein, wobei in diesem Fall der angegebene Domainname durch einen Name-Server in die zugehörige IP-Adresse des Anbindungsgeräts 17 übersetzt werden müsste. Der Aufruf des Cloud-Dienstes wird über die Cloud-Client-Schnittstelle 39 des Feldgeräts 11 und über den Feldbus 9 gemäß dem Pfeil 21 zur Programmierschnittstelle 20 des Anbindungsgeräts 17 übermittelt. Die auf Seiten des Anbindungsgeräts 17 vorgesehene Programmierschnittstelle 20 des Anbindungsgeräts 17 entspricht dabei genau der Programmierschnittstelle 19 auf Seiten der Cloud 7, wobei die gemäß der Schnittstellendefinition der Programmierschnittstelle 20 aufrufbaren Cloud-Dienste 40 mit den von der Programmierschnittstelle 19 bereitgestellten Cloud-Diensten 41 übereinstimmen. Vorzugsweise wird zur Implementierung der Programmierschnittstelle 20 des Anbindungsgeräts 17 derselbe Code wie bei der Implementierung der Programmierschnittstelle 19 der Cloud 7 verwendet.

Der entsprechend dem Pfeil 21 vom Feldgerät 11 zum Anbindungsgerät 17 übermittelte Aufruf eines Cloud-Dienstes wird von der Programmierschnittstelle 20 empfangen und ausgewertet. Wenn es sich bei dem übermittelten Aufruf um einen gültigen Aufruf eines Cloud-Dienstes 40 handelt, wird der Aufruf des Cloud-Dienstes von dem Anbindungsgerät 17 weiterverarbeitet und in einen an die Cloud 7 gerichteten Aufruf umgesetzt. Wenn sich dagegen herausstellt, dass es sich bei dem übermittelten Aufruf nicht um einen gültigen Aufruf eines in der Programmierschnittstelle 20 vorgesehenen Cloud-Dienstes handelt, dann würde der Aufruf nicht weiter behandelt oder es würde eine Fehlermeldung ausgegeben. Bei einem gültigen Aufruf setzt das Anbindungsgerät 17 den über die Programmierschnittstelle 20 empfangenen Aufruf in einen an die Programmierschnittstelle 19 der Cloud 7 gerichteten Aufruf um. Hierzu wird die in dem empfangenen Aufruf enthaltene IP-Adresse 38 des Anbindungsgeräts 17 durch die IP-Adresse 42 der Cloud 7 ersetzt. Ansonsten werden in der Regel keine weiteren Modifikationen des empfangenen Aufrufs durchgeführt, so dass der Aufruf in im Wesentlichen unveränderter Form über die Cloud-Client-Schnittstelle 22 des Anbindungsgeräts 17 und die Datenverbindung 18 gemäß dem Pfeil 23 zur Programmierschnittstelle 19 der Cloud 7 übermittelt wird. Dabei wird der über die Datenverbindung 18 übertragene Datenfluss durch die Firewall 43 des Industrial Ethernet-Netzwerks überprüft. Mittels des zur Cloud 7 übermittelten Aufrufs kann ein gewünschter Cloud-Dienst aufgerufen werden, denn die in der Schnittstellendefinition der Programmierschnittstelle 20 spezifizierten Cloud-Dienste 40 entsprechen den in der Programmierschnittstelle 19 definierten Cloud-Diensten 41. Im vorliegenden Beispiel wird also der für das Aktualisieren des Cloudeintrags zum Feldgerät 11 zuständige Cloud-Dienst aufgerufen und ausgeführt, wobei der Eintrag durch die im Aufruf mitgeführten Daten aktualisiert wird.

In umgekehrter Richtung können beispielsweise ausgelesene Daten eines Eintrags oder eine Bestätigung eines Aufrufs von der Cloud 7 zum Anbindungsgerät 17 und von dort gegebenenfalls weiter zum Feldgerät 11 übermittelt werden. Beispielsweise kann eine Bestätigungsnachricht über die Programmierschnittstelle 19 der Cloud 7 in Richtung des Pfeils 24 über die Datenverbindung 18 zur Cloud-Client-Schnittstelle 22 des Anbindungsgeräts 17 übertragen werden. Das Anbindungsgerät 17 wandelt die empfangene Nachricht in eine an das Feldgerät 11 adressierte Nachricht um und übermittelt diese Nachricht über die Programmierschnittstelle 20 und den Feldbus 9 zur Cloud-Client-Schnittstelle 39 des Feldgeräts 11, wie dies in Figur 4 durch den Pfeil 25 dargestellt ist. Auf diese Weise erhält das Feldgerät 11 eine Bestätigung, dass der Aufruf des Cloud-Dienstes von der Cloud 7 erhalten und verarbeitet wurde. Bei diesem Verfahren der Bestätigung von Aufrufen werden also die Nachrichten der Cloud 7 transparent zum Feldgerät 11 durchgereicht. Das Feldgerät 11 wird über die auf Seiten der Cloud 7 stattfindende Verarbeitung informiert, allerdings kann es bis zum Erhalt der Bestätigungsnachricht zu zeitlichen Verzögerungen kommen. Insofern kann entsprechend einem alternativ oder zusätzlich vorgesehenen zweiten Bestätigungsverfahren vorgesehen sein, dass das Anbindungsgerät 17 nach dem Empfang eines vom Feldgerät 11 ausgesendeten Aufrufs eines Cloud-Dienstes über die Programmierschnittstelle 20 und den Feldbus 9 ohne zeitlichen Verzug eine Bestätigungsnachricht zur Cloud-Client-Schnittstelle 39 des Feldgeräts 11 übermittelt. Der Vorteil dieses zweiten Bestätigungsverfahrens ist insbesondere die geringere zeitliche Verzögerung bis zum Erhalt der Bestätigung.

Die Datenübermittlung zwischen dem Anbindungsgerät 17 und der Cloud 7 erfolgt vorzugsweise in verschlüsselter Form, wobei ein an die Cloud 7 gerichteter Aufruf eines Cloud-Dienstes auf Seiten des Anbindungsgeräts 17 verschlüsselt wird. Auch in umgekehrter Richtung von der Cloud 7 zum Anbindungsgerät 17 erfolgt die Datenübermittlung vorzugsweise in verschlüsselter Form. Vorzugsweise kann auf dem Anbindungsgerät 17 ein Schlüssel oder ein Sicherheitszertifikat für den Datenaustausch mit der Cloud hinterlegt sein, wobei der Schlüssel oder das Sicherheitszertifikat zur Verschlüsselung und Entschlüsselung der Daten verwendet werden kann. Vorzugsweise ist der Schlüssel beziehungsweise das Sicherheitszertifikat ausschließlich auf Seiten des Anbindungsgeräts 17 gespeichert und wird dort zur Ver- und Entschlüsselung der Daten eingesetzt. Es ist daher nicht erforderlich, auf Seiten der Feldbuskomponenten Kopien dieses Schlüssels oder dieses Sicherheitszertifikats bereitzuhalten. Dies ist unter Sicherheitsaspekten sinnvoll. Wenn ein Feldgerät ausgemustert wird, ist durch diese Maßnahme sichergestellt, dass auf dem Feldgerät keine für den Zugriff auf die Cloud benötigten sicherheitsrelevanten Informationen gespeichert sind, die ein Dritter für einen unberechtigten Zugriff auf die Cloud nutzen könnte.

Darüber hinaus kann vorzugsweise auch innerhalb des Feldbusnetzwerks 6 die Datenübertragung zwischen den Feldbuskomponenten und dem Anbindungsgerät 17 in verschlüsselter Form erfolgen, wobei für die Verschlüsselung innerhalb des Feldbusnetzwerks ein weiteres, hierfür vorgesehenes Sicherheitszertifikat verwendet wird. Insofern ist es erforderlich, auf Seiten des Anbindungsgeräts 17 den vom Feldgerät 11 aus verschlüsselt übermittelten Aufruf eines Cloud-Dienstes zu entschlüsseln, wobei hierzu das Verschlüsselungszertifikat des Feldbusnetzwerks 6 benötigt wird. Anschließend wird die Adressierung des Aufrufs geändert, wobei als neue Adresse die IP-Adresse 42 der Cloud 7 verwendet wird. Der so erhaltene Aufruf eines Cloud-Dienstes wird anschließend innerhalb des Anbindungsgeräts 17 mittels des Zertifikats der Cloud 7 verschlüsselt und in verschlüsselter Form über die Datenverbindung 18 zur Cloud 7 übertragen. In umgekehrter Richtung werden von der Cloud 7 aus verschlüsselte Daten zum Anbindungsgerät 17 übermittelt, wobei diese Daten im Anbindungsgerät 17 entschlüsselt, umadressiert und mittels des Zertifikats des Feldbusnetzwerks 6 verschlüsselt werden. Die verschlüsselten Daten werden dann vom Anbindungsgerät 17 zum Feldgerät 11 übertragen. Das Anbindungsgerät 17 ist daher für das Ver- und Entschlüsseln der empfangenen und weitergeleiteten Datenströme zuständig.

Nachdem der gesamte Datenverkehr zwischen dem Feldbusnetzwerk 6 und der Cloud 7 über das Anbindungsgerät 17 und die Datenverbindung 18 abgewickelt wird, ist es seitens der Firewall 43 lediglich erforderlich, den Datenverkehr auf der Datenverbindung 18 zu überwachen. Selbst wenn auf Seiten des Feldbusnetzwerks 6 neue Feldgeräte angeschlossen werden oder bisherige Komponenten des Feldbusnetzwerks 6 ausgetauscht werden, erfordert dies keine Aktualisierung der Einstellungen auf Seiten der Firewall 43. Für die Sicherheitsüberwachung des Datenaustauschs zwischen dem Anbindungsgerät 17 und der Cloud 7 ist es nicht erforderlich, dass die Firewall 43 über jede Änderung von Komponenten des Feldbusnetzwerks 6 in Kenntnis gesetzt wird. Dadurch wird die Administration des Systems deutlich vereinfacht, weil die Administratoren des Feldbusnetzwerks selbsttätig Hardware- und Softwareänderungen des Feldbusnetzwerks vornehmen können, ohne dass bei jeder derartigen Änderungen die Einstellungen der IT-Sicherheitssysteme angepasst werden müssten. Darüber hinaus ist zwischen dem Feldbusnetzwerk 6 und der Cloud 7 lediglich eine einzige Datenverbindung 18 vorgesehen, was die sicherheitstechnische Überwachung des Datenverkehrs zwischen dem Feldbusnetzwerk 6 und der Außenwelt deutlich vereinfacht.

Durch die lokale Programmierschnittstelle 20 des erfindungsgemäßen Anbindungsgeräts 17 wird innerhalb des Feldbusnetzwerks 6 ein Duplikat der Programmierschnittstelle 19 der Cloud 7 bereitgestellt, an das sämtlicher an die Cloud 7 zu übermittelnde Datenverkehr gerichtet wird. Durch das Anbindungsgerät 17 wird der für die Cloud 7 bestimmte Datenverkehr zusammengeführt und gebündelt. Dabei werden die von den verschiedenen Feldgeräten, Gatewaygeräten und sonstigen Komponenten des Feldbusnetzwerks 6 empfangenen Aufrufe von Cloud-Diensten in der Reihenfolge des Empfangs durch das Anbindungsgerät 17 ausgeführt, so dass die verschiedenen Aufrufe in der Reihenfolge ihres Eingangs nacheinander zur Cloud 7 übertragen und dort verarbeitet werden.

Dabei kann es insbesondere sinnvoll sein, auf Seiten des Anbindungsgeräts 17 einen Pufferspeicher zur Verfügung zu stellen, in dem vom Feldbusnetzwerk 6 empfangene Aufrufe von Cloud-Diensten zwischengespeichert werden können. Damit kann insbesondere verhindert werden, dass bei einer gestörten oder überlasteten Datenverbindung 18 zur Cloud 7 die von den verschiedenen Komponenten empfangenen Aufrufe verloren gehen. Wenn die Datenverbindung 18 zur Cloud 7 also inaktiv oder überlastet ist, werden die Aufrufe von Cloud-Diensten im Pufferspeicher des Anbindungsgeräts 17 in der Reihenfolge ihres Eingangs gespeichert, so dass keiner der Aufrufe verloren geht. Wenn die Datenverbindung 18 und die Cloud 7 dann wieder verfügbar sind, können die gespeicherten Aufrufe nacheinander zur Cloud 7 übermittelt und dort bearbeitet werden. Mittels eines derartigen Pufferspeichers kann also verhindert werden, dass Aufrufe von Cloud-Diensten verloren gehen. Der Pufferspeicher kann beispielsweise als sogenannter FIFO (First-In-First-Out)-Speicher realisiert werden, wobei die gespeicherten Aufrufe beispielsweise mit Hilfe von zwei Pointern verwaltet werden können.

Vorzugsweise ist das Anbindungsgerät 17 dazu ausgelegt, die empfangenen Aufrufe transparent in entsprechende, an die Cloud 7 gerichtete Aufrufe umzuwandeln. Dabei wird in der Regel lediglich die Adressierung des Aufrufs geändert. Zusätzlich kann jedoch auch vorgesehen sein, dass beispielsweise ein innerhalb des Feldbusnetzwerks 6 verwendetes veraltetes Format für den Cloudzugriff beispielsweise auf Seiten des Anbindungsgeräts 17 in eine aktuellere Version umgewandelt wird. Bei einer derartigen Lösung ist es lediglich erforderlich, auf Seiten des Anbindungsgeräts 17 das neueste Datenzugriffsformat zu verwenden, wohingegen innerhalb des Feldbusnetzwerks 6 auch veraltete Versionen verwendet werden können.

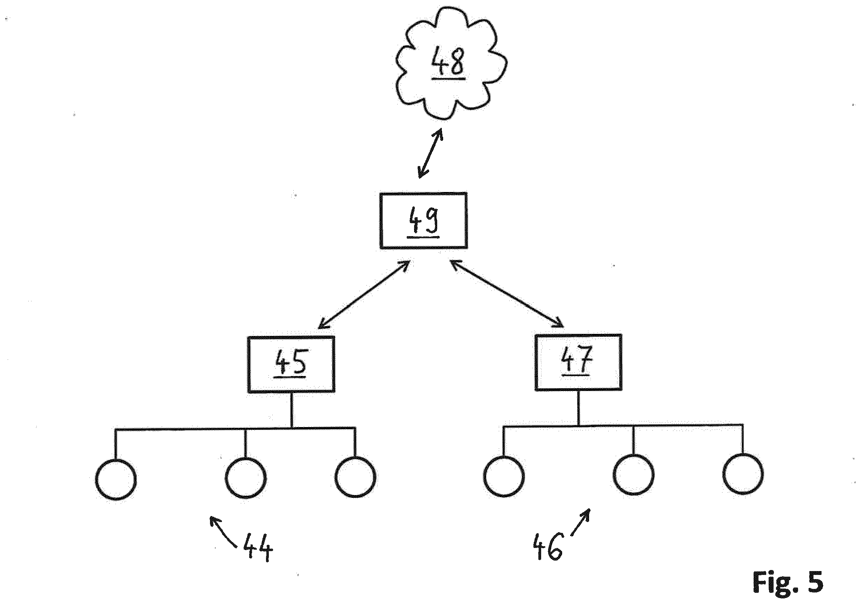

Darüber hinaus können die erfindungsgemäßen Anbindungsgeräte auch in einer kaskadierten Anordnung eingesetzt werden, um an die Cloud gerichteten Datenverkehr aus mehreren Feldbusnetzwerken zusammenzuführen und zu bündeln. In Fig. 5 ist ein derartiges System gezeigt. An ein erstes Feldbusnetzwerk 44 ist ein erstes Anbindungsgerät 45 angeschlossen und an ein zweites Feldbusnetzwerk 46 ist ein zweites Anbindungsgerät 47 angeschlossen. Ein Datenverkehr, der aus dem ersten Feldbusnetzwerk 44 in die Cloud 48 übertragen werden soll, wird zunächst an das erste Anbindungsgerät 45 adressiert. Von dort wird dieser Datenverkehr jedoch nicht direkt an die Cloud 48, sondern vielmehr an die Adresse eines weiteren Anbindungsgeräts 49 gesendet. Das weitere Anbindungsgerät 49 empfängt den Datenverkehr vom ersten Anbindungsgerät 45 und führt eine Umadressierung der empfangenen Datenpakete durch, wobei als Zieladresse jetzt die Adresse der Cloud 48 angegeben wird. Datenverkehr, der vom zweiten Feldbusnetzwerk 46 an die Cloud 48 gesendet werden soll, wird zunächst ebenfalls an das zweite Anbindungsgerät 47 adressiert. Das zweite Anbindungsgerät 47 leitet diesen Datenverkehr an die IP-Adresse des weiteren Anbindungsgeräts 49 weiter. Das weitere Anbindungsgerät 49 empfängt diesen Datenverkehr und adressiert diesen Datenverkehr an die Cloud 48. Insofern erfüllt das weitere Anbindungsgerät 49, das in einer Kaskade mit dem ersten Anbindungsgerät 45 beziehungsweise dem zweiten Anbindungsgerät 47 angeordnet ist, die Aufgabe, den Datenverkehr aus dem ersten Feldbusnetzwerk 44 und den Datenverkehr aus dem zweiten Feldbusnetzwerk 46 zusammenzuführen und gebündelt zur Cloud 48 zu übertragen. In umgekehrter Richtung empfängt das weitere Anbindungsgerät 49 Mitteilungen und Daten von der Cloud 48 und verteilt die empfangenen Mitteilungen und Daten an das erste Anbindungsgerät 45 und an das zweite Anbindungsgerät 47. Von dort werden diese Mitteilungen und Daten weiter zum ersten Feldbusnetzwerk 44 bzw. zum zweiten Feldbusnetzwerk 46 übertragen.

## Patentansprüche

1. Eine Anbindungsvorrichtung (17) zur Abwicklung eines Datenaustauschs zwischen einem Feldbusnetzwerk (6) und einer Cloud (7), welche aufweist
eine erste Schnittstelle (20), über die die Anbindungsvorrichtung (17) mit mindestens einer Feldbuskomponente (8, 10, 11, 12, 13, 14) des Feldbusnetzwerks (6) verbindbar ist, eine zweite Schnittstelle (22), über die die Anbindungsvorrichtung (17) mit der Cloud (7) verbindbar ist,
**dadurch gekennzeichnet, dass**
die erste Schnittstelle (20) derart als eine der Programmierschnittstelle (19) der Cloud (7) entsprechende Schnittstelle ausgebildet ist, dass eine Schnittstellendefinition der ersten Schnittstelle (20) mit einer Schnittstellendefinition der Programmierschnittstelle (19) der Cloud (7) übereinstimmt, so dass die erste Schnittstelle von einer Feldbuskomponente (8, 10, 11, 12, 13, 14) des Feldbusnetzwerks (6) in genau derselben Weise und mit derselben Syntax ansprechbar ist wie die Programmierschnittstelle der Cloud,
wobei die Anbindungsvorrichtung (17) dazu ausgelegt ist, einen über die erste Schnittstelle (20) von der Feldbuskomponente (8, 10, 11, 12, 13, 14) des Feldbusnetzwerks (6) empfangenen Aufruf eines Cloud-Diensts in einen an die Cloud (7) adressierten Aufruf eines Cloud-Diensts umzusetzen und über die zweite Schnittstelle (22) an die Cloud (7) zu übermitteln, und
wobei die Anbindungsvorrichtung (17) dazu ausgelegt ist, während einer Zeitspanne, während der auf die Cloud (7) nicht zugegriffen werden kann, über die erste Schnittstelle (20) empfangene Aufrufe von Cloud-Diensten zwischenzuspeichern und die Aufrufe von Cloud-Diensten zu einem späteren Zeitpunkt an die Cloud (7) zu schicken, wenn auf die Cloud (7) wieder zugegriffen werden kann.

2. Anbindungsvorrichtung nach Anspruch 1, **gekennzeichnet durch** mindestens eines von folgenden:
in der Programmierschnittstelle sind die über die Programmierschnittstelle aufrufbaren Cloud-Dienste spezifiziert;
die erste Schnittstelle ist als innerhalb des Feldbusnetzwerks angeordnete lokale Kopie der Programmierschnittstelle der Cloud ausgebildet;
auf Seiten der Anbindungsvorrichtung ist ein HTTP- oder HTTPS-Protokollstack vorgesehen, der dazu ausgelegt ist, von einer Feldbuskomponente empfangene Aufrufe von Cloud-Diensten zu verarbeiten.

3. Anbindungsvorrichtung nach Anspruch 1 oder Anspruch 2, **dadurch gekennzeichnet, dass** die Anbindungsvorrichtung dazu ausgelegt ist, einen über die erste Schnittstelle vom Feldbusnetzwerk empfangenen Aufruf eines Cloud-Diensts nur dann zu verarbeiten, wenn der Aufruf einem in der Schnittstellendefinition der Programmierschnittstelle vorgesehenen Cloud-Dienst entspricht.

4. Anbindungsvorrichtung nach einem der Ansprüche 1 bis 3, **gekennzeichnet durch** mindestens eines von folgenden:
die Anbindungsvorrichtung ist dazu ausgelegt, falls ein über die erste Schnittstelle empfangener Aufruf des Cloud-Diensts nicht einem in der Schnittstellendefinition vorgesehenen Aufruf eines Cloud-Diensts entspricht, den Aufruf des Cloud-Diensts zu verwerfen oder eine Fehlermeldung zu erzeugen;
die Anbindungsvorrichtung ist dazu ausgelegt, zu überprüfen, ob die Syntax eines über die erste Schnittstelle empfangenen Aufrufs eines Cloud-Diensts einer vorgegebenen Syntax für den Cloud-Dienst entspricht;
das Umsetzen eines über die erste Schnittstelle empfangenen Aufrufs eines Cloud-Diensts in einen über die zweite Schnittstelle an die Cloud übermittelbaren Aufruf umfasst ein Umadressieren des Aufrufs zur Adresse der Cloud;
die Anbindungsvorrichtung ist dazu ausgelegt, eine Adressierung von über die erste Schnittstelle empfangenen Aufrufen von Cloud-Diensten zu ändern und in den über die zweite Schnittstelle an die Cloud übermittelten Aufrufen von Cloud-Diensten die Adresse der Cloud als Adresse zu verwenden[Anspruch 5].

5. Anbindungsvorrichtung nach einem der Ansprüche 1 bis 4, **dadurch gekennzeichnet, dass** die Anbindungsvorrichtung dazu ausgelegt ist, über die zweite Schnittstelle von der Cloud empfangene Nachrichten oder Daten, die an eine Feldbuskomponente des Feldbusnetzwerks adressiert sind, über die erste Schnittstelle an die Feldbuskomponente des Feldbusnetzwerks zu senden.

6. Anbindungsvorrichtung nach einem der Ansprüche 1 bis 5, **gekennzeichnet durch** mindestens eines von folgenden:
die Anbindungsvorrichtung ist über die erste Schnittstelle mit einem Feldbus des Feldbusnetzwerks verbindbar;
die Anbindungsvorrichtung ist über die erste Schnittstelle mit einem Feldbus des Feldbusnetzwerks verbindbar und dazu ausgelegt, über den Feldbus von mindestens einer Feldbuskomponente des Feldbusnetzwerks Aufrufe von Cloud-Diensten zu empfangen;
die Anbindungsvorrichtung ist dazu ausgelegt, über mindestens eine zusätzliche Kommunikationsverbindung von mindestens einer Feldbuskomponente des Feldbusnetzwerks Aufrufe von Cloud-Diensten zu empfangen.

7. Anbindungsvorrichtung nach einem der Ansprüche 1 bis 6, **gekennzeichnet durch** mindestens eines von folgenden:
bei den Cloud-Diensten handelt es sich um Cloud-Dienste gemäß dem Standard WebServices;
die Cloud-Dienste umfassen mindestens einen von folgenden Diensten: Erzeugen eines Eintrags in der Cloud, Auslesen eines Eintrages aus der Cloud, Aktualisieren eines Eintrags in der Cloud, Löschen eines Eintrags in der Cloud;
die Cloud-Dienste umfassen CRUD-Operationen zum Erzeugen, Auslesen, Aktualisieren und Löschen von Einträgen in der Cloud;
das Feldbusnetzwerk umfasst einen Feldbus gemäß einem Industrial Ethernet Protokoll;
das Feldbusnetzwerk umfasst einen Feldbus gemäß einem der folgenden Standards:
EtherNet/IP, Profinet, EtherCAT, Modbus TCP, HART-IP, OPC, OPC-UA;
die erste Schnittstelle der Anbindungsvorrichtung ist dazu ausgelegt, mit dem Feldbusnetzwerk mittels Ethernet-Datenpaketen Daten auszutauschen.

8. Anbindungsvorrichtung nach einem der Ansprüche 1 bis 7, **gekennzeichnet durch** mindestens eines von folgenden:
von einer Feldbuskomponente werden über die Anbindungsvorrichtung folgende Daten in die Cloud geschrieben: eine Kennung der jeweiligen Feldbuskomponente, mindestens ein Parameterwert;
ein von einer Feldbuskomponente zur Anbindungsvorrichtung übermittelter Aufruf eines Cloud-Dienstes umfasst eine Identifikation der Feldbuskomponente;
ein von einer Feldbuskomponente zur Anbindungsvorrichtung übermittelter Aufruf eines Cloud-Dienstes umfasst einen Hersteller und eine Seriennummer der Feldbuskomponente;
ein von einer Feldbuskomponente zur Anbindungsvorrichtung übermittelter Aufruf eines Cloud-Dienstes umfasst mindestens eines von folgenden: einen UUID, eine MAC-Adresse einer Netzwerkkarte der Feldbuskomponente, eine Kennung einer SIM-Karte der Feldbuskomponente.

9. Anbindungsvorrichtung nach einem der Ansprüche 1 bis 8, **dadurch gekennzeichnet, dass** die Anbindungsvorrichtung dazu ausgelegt ist, nach Empfang eines von einer Feldbuskomponente zur ersten Schnittstelle der Anbindungsvorrichtung gesendeten Aufrufs eines Cloud-Diensts eine Bestätigungsnachricht über die erste Schnittstelle zurück zur jeweiligen Feldbuskomponente zu senden, und/oder
dass die Anbindungsvorrichtung nach Empfang eines über die erste Schnittstelle zur Anbindungsvorrichtung übermittelten Aufrufs eines Cloud-Diensts und der Umsetzung dieses Aufrufs in einen über die zweite Schnittstelle zur Cloud übermittelten Aufruf dazu ausgelegt ist, eine von der Cloud über die zweite Schnittstelle empfangene Bestätigungsnachricht über die erste Schnittstelle zur jeweiligen Feldbuskomponente zu senden, von der der Aufruf des Cloud-Diensts ausgegangen war[Anspruch 11].

10. Anbindungsvorrichtung nach einem der Ansprüche 1 bis 9, **gekennzeichnet durch** mindestens eines von folgenden:
die Anbindungsvorrichtung ist dazu ausgelegt, einen über die erste Schnittstelle empfangenen Aufruf eines Cloud-Diensts gemäß einer für die Datenübertragung von der Anbindungsvorrichtung zur Cloud verwendeten Verschlüsselung zu verschlüsseln;
die Anbindungsvorrichtung ist dazu ausgelegt, einen über die erste Schnittstelle empfangenen Aufruf eines Cloud-Diensts, der gemäß einer im Feldbusnetzwerk verwendeten ersten Verschlüsselung verschlüsselt ist, zu entschlüsseln und gemäß einer für die Datenübertragung von der Anbindungsvorrichtung zur Cloud verwendeten zweiten Verschlüsselung zu verschlüsseln;
ein Schlüssel oder ein Verschlüsselungszertifikat zur Verschlüsselung von Aufrufen von Cloud-Diensten, die von der Anbindungsvorrichtung zur Cloud übertragen werden, ist ausschließlich auf Seiten der Anbindungsvorrichtung gespeichert.

11. Anbindungsvorrichtung nach einem der Ansprüche 1 bis 10, **dadurch gekennzeichnet, dass** das Feldbusnetzwerk eine Firewall umfasst, wobei die Firewall so konfiguriert ist, dass ein Datenaustausch zwischen der Anbindungsvorrichtung und der Cloud freigegeben ist, wohingegen ein Datenaustausch zwischen anderen Feldbuskomponenten des Feldbusnetzwerks und der Cloud blockiert ist.

12. Ein Feldbusnetzwerk (6), welches aufweist:
einen Feldbus (9),
mindestens eine an den Feldbus (9) angeschlossene Feldbuskomponente (8, 10, 11, 12, 13, 14),
mindestens eine Anbindungsvorrichtung (17) gemäß einem der Ansprüche 1 bis 11 zur Abwicklung eines Datenaustauschs mit einer Cloud (7).

13. Feldbusnetzwerk nach Anspruch 12, **gekennzeichnet durch** mindestens eines von folgenden:
die mindestens eine Feldbuskomponente umfasst mindestens eines von folgenden:
mindestens ein Feldgerät, mindestens ein Gatewaygerät, mindestens eine sonstige Feldbuskomponente;
die mindestens eine Feldbuskomponente des Feldbusnetzwerks ist so konfigurierbar, dass Aufrufe von Cloud-Diensten an die Adresse der Anbindungsvorrichtung adressiert sind;
mindestens eine der Feldbuskomponenten des Feldbusnetzwerks ist dazu ausgelegt, an die Cloud gerichtete Aufrufe von Cloud-Diensten an einen Domainnamen der Anbindungsvorrichtung zu senden, wobei der Domainname mittels eines Name-Servers in eine Adresse der Anbindungsvorrichtung umwandelbar ist;
das Feldbusnetzwerk umfasst mehrere Anbindungsvorrichtungen in kaskadierter Anordnung.

14. Feldbusnetzwerk nach Anspruch 12 oder Anspruch 13, **gekennzeichnet durch** mindestens eines von folgenden:
auf Seiten mindestens einer Feldbuskomponente ist ein HTTP- oder HTTPS-Protokollstack vorgesehen, der dazu ausgelegt ist, Aufrufe von Cloud-Diensten zu erzeugen;
auf Seiten mindestens einer Feldbuskomponente ist ein HTTP- oder HTTPS-Protokollstack vorgesehen, der dazu ausgelegt ist, wahlweise an die Anbindungsvorrichtung oder direkt an die Cloud gerichtete Aufrufe von Cloud-Diensten zu erzeugen;
mindestens eine der Feldbuskomponenten ist dazu ausgelegt, Aufrufe von Cloud-Diensten in Form von Ethernet-Paketen zur Anbindungsvorrichtung zu übermitteln;
auf Seiten der Anbindungsvorrichtung ist ein HTTP- oder HTTPS-Protokollstack vorgesehen, der dazu ausgelegt ist, von einer Feldbuskomponente empfangene Aufrufe von Cloud-Diensten zu verarbeiten.

15. Ein Verfahren zur Übermittlung von Aufrufen von Cloud-Diensten von einem Feldbusnetzwerk (6) an eine Cloud (7), wobei das Feldbusnetzwerk (6) aufweist:
einen Feldbus (9),
mindestens eine an den Feldbus (9) angeschlossene Feldbuskomponente (8, 10, 11, 12, 13, 14),
eine Anbindungsvorrichtung (17), die eine erste Schnittstelle (20) umfasst, über die die Anbindungsvorrichtung (17) mit mindestens einer Feldbuskomponente (8, 10, 11, 12, 13, 14) des Feldbusnetzwerks (6) verbindbar ist, und die eine zweite Schnittstelle (22) zur 5Verbindung mit der Cloud (7) umfasst, wobei die erste Schnittstelle (20) derart als eine der Programmierschnittstelle (19) der Cloud (7) entsprechende Schnittstelle ausgebildet ist, dass eine Schnittstellendefinition der ersten Schnittstelle (20) mit einer Schnittstellendefinition der Programmierschnittstelle (19) der Cloud (7) übereinstimmt, so dass die erste Schnittstelle von einer Feldbuskomponente (8, 10, 11, 12, 13, 14) des Feldbusnetzwerks (6) in genau derselben Weise und mit derselben Syntax ansprechbar ist wie die Programmierschnittstelle der Cloud, und
wobei das Verfahren folgende Schritte aufweist:
Empfangen eines von einer Feldbuskomponente (8, 10, 11, 12, 13, 14) an die Anbindungsvorrichtung (17) gesendeten Aufrufs eines Cloud-Diensts durch die Anbindungsvorrichtung (17) über die erste Schnittstelle (20),
Umsetzen des über die erste Schnittstelle (20) empfangenen Aufrufs eines Cloud-Diensts durch die Anbindungsvorrichtung (17) in einen an die Cloud (7) adressierten Aufruf eines Cloud-Diensts und Übermitteln des Aufrufs eines Cloud-Diensts über die zweite Schnittstelle (22) an die Cloud (7),
wobei während einer Zeitspanne, während der auf die Cloud (7) nicht zugegriffen werden kann, über die erste Schnittstelle (20) empfangene Aufrufe von Cloud-Diensten von der Anbindungsvorrichtung (17) zwischengespeichert und zu einem späteren Zeitpunkt, wenn auf die Cloud wieder (7) zugegriffen werden kann, an die Cloud (7) geschickt werden.

## Claims

1. A connection device (17) for carrying out data exchange between a fieldbus network (6) and a cloud (7), comprising
a first interface (20), via which the connection device (17) is connectable to at least one fieldbus component (8, 10, 11, 12, 13, 14) of the fieldbus network (6),
a second interface (22), via which the connection device (17) is connectable to the cloud (7),
**characterized in that**
the first interface (20) is configured as an interface corresponding to the programming interface (19) of the cloud (7) in such a way that an interface definition of the first interface (20) matches an interface definition of the programming interface (19) of the cloud (7), so that the first interface can be addressed by a fieldbus component (8, 10, 11, 12, 13, 14) of the fieldbus network (6) in exactly the same manner and with the same syntax as the programming interface of the cloud,
wherein the connection device (17) is configured to convert a call of a cloud service received via the first interface (20) from the fieldbus component (8, 10, 11, 12, 13, 14) of the fieldbus network (6) into a call of a cloud service addressed to the cloud (7) and to transmit it to the cloud (7) via the second interface (22), and
wherein the connection device (17) is configured, during a time period during which the cloud (7) cannot be accessed, to buffer calls of cloud services received via the first interface (20) and to send the calls of cloud services to the cloud (7) at a later time when the cloud (7) can be accessed again.

2. The connection device according to claim 1, **characterized by** at least one of the following:
the cloud services callable via the programming interface are specified in the programming interface;
the first interface is configured as a local copy of the programming interface of the cloud arranged within the fieldbus network;
an HTTP or HTTPS protocol stack is provided on the connection device side and is configured to process calls of cloud services received from a fieldbus component.

3. The connection device according to claim 1 or claim 2, **characterized in that** the connection device is configured to process a call of a cloud service received from the fieldbus network via the first interface only if the call corresponds to a cloud service provided in the interface definition of the programming interface.

4. The connection device according to any one of claims 1 to 3, **characterized by** at least one of the following:
the connection device is configured, if a call of the cloud service received via the first interface does not correspond to a call of a cloud service provided in the interface definition, to discard the call of the cloud service or to generate an error message;
the connection device is configured to check whether the syntax of a call of a cloud service received via the first interface corresponds to a predefined syntax for the cloud service;
converting a call of a cloud service received via the first interface into a call transmittable to the cloud via the second interface comprises readdressing the call to the address of the cloud;
the connection device is configured to change an addressing of calls of cloud services received via the first interface and to use the address of the cloud as the address in the calls of cloud services transmitted to the cloud via the second interface [claim 5].

5. The connection device according to any one of claims 1 to 4, **characterized in that** the connection device is configured to send, via the first interface to the fieldbus component of the fieldbus network, messages or data received from the cloud via the second interface and addressed to a fieldbus component of the fieldbus network.

6. The connection device according to any one of claims 1 to 2, **characterized by** at least one of the following:
the connection device is connectable via the first interface to a fieldbus of the fieldbus network;
the connection device is connectable via the first interface to a fieldbus of the fieldbus network and is configured to receive calls of cloud services from at least one fieldbus component of the fieldbus network via the fieldbus;
the connection device is configured to receive calls of cloud services from at least one fieldbus component of the fieldbus network via at least one additional communication connection.

7. The connection device according to any one of claims 1 to 6, **characterized by** at least one of the following:
the cloud services are cloud services according to the WebServices standard;
the cloud services comprise at least one of the following services: creating an entry in the cloud, reading an entry from the cloud, updating an entry in the cloud, deleting an entry in the cloud;
the cloud services comprise CRUD operations for creating, reading, updating and deleting entries in the cloud;
the fieldbus network comprises a fieldbus according to an Industrial Ethernet protocol;
the fieldbus network comprises a fieldbus according to one of the following standards:
EtherNet/IP, Profinet, EtherCAT, Modbus TCP, HART-IP, OPC, OPC-UA;
the first interface of the connection device is configured to exchange data with the fieldbus network by means of Ethernet data packets.

8. The connection device according to any one of claims 1 to 7, **characterized by** at least one of the following:
the following data are written to the cloud by a fieldbus component via the connection device: an identifier of the respective fieldbus component, at least one parameter value;
a call of a cloud service transmitted from a fieldbus component to the connection device comprises an identification of the fieldbus component;
a call of a cloud service transmitted from a fieldbus component to the connection device comprises a manufacturer and a serial number of the fieldbus component;
a call of a cloud service transmitted from a fieldbus component to the connection device comprises at least one of the following: a UUID, a MAC address of a network card of the fieldbus component, an identifier of a SIM card of the fieldbus component.

9. The connection device according to any one of claims 1 to 8, **characterized in that** the connection device is configured, after receiving a call of a cloud service sent from a fieldbus component to the first interface of the connection device, to send an acknowledgement message via the first interface back to the respective fieldbus component, and/or
that the connection device, after receiving a call of a cloud service transmitted via the first interface to the connection device and after converting this call into a call transmitted to the cloud via the second interface, is configured to send an acknowledgement message received from the cloud via the second interface to the respective fieldbus component via the first interface, from which fieldbus component the call of the cloud service originated [claim 11].

10. The connection device according to any one of claims 1 to 9, **characterized by** at least one of the following:
the connection device is configured to encrypt a call of a cloud service received via the first interface according to an encryption used for data transmission from the connection device to the cloud;
the connection device is configured to decrypt a call of a cloud service received via the first interface, which is encrypted according to a first encryption used in the fieldbus network, and to encrypt it according to a second encryption used for data transmission from the connection device to the cloud;
a key or an encryption certificate for encrypting calls of cloud services that are transmitted from the connection device to the cloud is stored exclusively on the connection device side.

11. The connection device according to any one of claims 1 to 10, **characterized in that** the fieldbus network comprises a firewall, wherein the firewall is configured such that data exchange between the connection device and the cloud is enabled, whereas data exchange between other fieldbus components of the fieldbus network and the cloud is blocked.

12. A fieldbus network (6), comprising:
a fieldbus (9),
at least one fieldbus component (8, 10, 11, 12, 13, 14) connected to the fieldbus (9),
at least one connection device (17) according to any one of claims 1 to 2 for carrying out data exchange with a cloud (7).

13. The fieldbus network according to claim 12, **characterized by** at least one of the following:
the at least one fieldbus component comprises at least one of the following: at least one field device, at least one gateway device, at least one other fieldbus component;
the at least one fieldbus component of the fieldbus network is configurable such that calls of cloud services are addressed to the address of the connection device;
at least one of the fieldbus components of the fieldbus network is configured to send calls of cloud services directed to the cloud to a domain name of the connection device, wherein the domain name is convertible into an address of the connection device by means of a name server;
the fieldbus network comprises a plurality of connection devices in a cascaded arrangement.

14. The fieldbus network according to claim 12 or claim 13, **characterized by** at least one of the following:
an HTTP or HTTPS protocol stack is provided on the side of at least one fieldbus component and is configured to generate calls of cloud services;
an HTTP or HTTPS protocol stack is provided on the side of at least one fieldbus component and is configured to selectively generate calls of cloud services directed to the connection device or directly to the cloud;
at least one of the fieldbus components is configured to transmit calls of cloud services in the form of Ethernet packets to the connection device;
an HTTP or HTTPS protocol stack is provided on the connection device side and is configured to process calls of cloud services received from a fieldbus component.

15. A method for transmitting calls of cloud services from a fieldbus network (6) to a cloud (7), wherein the fieldbus network (6) comprises:
a fieldbus (9),
at least one fieldbus component (8, 10, 11, 12, 13, 14) connected to the fieldbus (9),
a connection device (17) comprising a first interface (20), via which the connection device (17) is connectable to at least one fieldbus component (8, 10, 11, 12, 13, 14) of the fieldbus network (6), and comprising a second interface (22) for connection to the cloud (7), wherein the first interface (20) is configured as an interface corresponding to the programming interface (19) of the cloud (7) in such a way that an interface definition of the first interface (20) matches an interface definition of the programming interface (19) of the cloud (7), so that the first interface can be addressed by a fieldbus component (8, 10, 11, 12, 13, 14) of the fieldbus network (6) in exactly the same manner and with the same syntax as the programming interface of the cloud, and
wherein the method comprises the following steps:
receiving, by the connection device (17) via the first interface (20), a call of a cloud service sent from a fieldbus component (8, 10, 11, 12, 13, 14) to the connection device (17),
converting, by the connection device (17), the call of a cloud service received via the first interface (20) into a call of a cloud service addressed to the cloud (7) and transmitting the call of a cloud service to the cloud (7) via the second interface (22),
wherein, during a time period during which the cloud (7) cannot be accessed, calls of cloud services received via the first interface (20) are buffered by the connection device (17) and are sent to the cloud (7) at a later time when the cloud (7) can be accessed again.

## Revendications

1. Dispositif de connexion (17) destiné à réaliser un échange de données entre un réseau de bus de terrain (6) et un cloud (7), comprenant
une première interface (20), par l'intermédiaire de laquelle le dispositif de connexion (17) peut être connecté à au moins un composant de bus de terrain (8, 10, 11, 12, 13, 14) du réseau de bus de terrain (6),
une deuxième interface (22), par l'intermédiaire de laquelle le dispositif de connexion (17) peut être connecté au cloud (7),
**caractérisé en ce que**
la première interface (20) est configurée comme une interface correspondant à l'interface de programmation (19) du cloud (7), de telle sorte qu'une définition d'interface de la première interface (20) corresponde à une définition d'interface de l'interface de programmation (19) du cloud (7), de sorte que la première interface puisse être adressée par un composant de bus de terrain (8, 10, 11, 12, 13, 14) du réseau de bus de terrain (6) exactement de la même manière et avec la même syntaxe que l'interface de programmation du cloud,
dans lequel le dispositif de connexion (17) est configuré pour convertir un appel d'un service cloud reçu via la première interface (20) en provenance du composant de bus de terrain (8, 10, 11, 12, 13, 14) du réseau de bus de terrain (6) en un appel d'un service cloud adressé au cloud (7) et pour le transmettre au cloud (7) via la deuxième interface (22), et
dans lequel le dispositif de connexion (17) est configuré, pendant une période durant laquelle le cloud (7) ne peut pas être atteint, pour mettre en mémoire tampon des appels de services cloud reçus via la première interface (20) et pour envoyer les appels de services cloud au cloud (7) à un moment ultérieur lorsque le cloud (7) peut de nouveau être atteint.

2. Dispositif de connexion selon la revendication 1, **caractérisé par** au moins l'un des éléments suivants :
les services cloud pouvant être appelés via l'interface de programmation sont spécifiés dans l'interface de programmation ;
la première interface est configurée comme une copie locale de l'interface de programmation du cloud, agencée au sein du réseau de bus de terrain ;
une pile de protocoles HTTP ou HTTPS est prévue du côté du dispositif de connexion et est configurée pour traiter des appels de services cloud reçus d'un composant de bus de terrain.

3. Dispositif de connexion selon la revendication 1 ou la revendication 2, **caractérisé en ce que** le dispositif de connexion est configuré pour traiter un appel d'un service cloud reçu du réseau de bus de terrain via la première interface uniquement si l'appel correspond à un service cloud prévu dans la définition d'interface de l'interface de programmation.

4. Dispositif de connexion selon l'une quelconque des revendications 1 à 3, **caractérisé par** au moins l'un des éléments suivants :
le dispositif de connexion est configuré, lorsqu'un appel du service cloud reçu via la première interface ne correspond pas à un appel d'un service cloud prévu dans la définition d'interface, pour rejeter l'appel du service cloud ou pour générer un message d'erreur ;
le dispositif de connexion est configuré pour vérifier si la syntaxe d'un appel d'un service cloud reçu via la première interface correspond à une syntaxe prédéfinie pour le service cloud ;
la conversion d'un appel d'un service cloud reçu via la première interface en un appel pouvant être transmis au cloud via la deuxième interface comprend le réadressage de l'appel vers l'adresse du cloud ;
le dispositif de connexion est configuré pour modifier un adressage d'appels de services cloud reçus via la première interface et pour utiliser l'adresse du cloud comme adresse dans les appels de services cloud transmis au cloud via la deuxième interface [revendication 5].

5. Dispositif de connexion selon l'une quelconque des revendications 1 à 4, **caractérisé en ce que** le dispositif de connexion est configuré pour envoyer, via la première interface au composant de bus de terrain du réseau de bus de terrain, des messages ou des données reçus du cloud via la deuxième interface et adressés à un composant de bus de terrain du réseau de bus de terrain.

6. Dispositif de connexion selon l'une quelconque des revendications 1 à 2, **caractérisé par** au moins l'un des éléments suivants :
le dispositif de connexion peut être connecté via la première interface à un bus de terrain du réseau de bus de terrain ;
le dispositif de connexion peut être connecté via la première interface à un bus de terrain du réseau de bus de terrain et est configuré pour recevoir des appels de services cloud d'au moins un composant de bus de terrain du réseau de bus de terrain via le bus de terrain ;
le dispositif de connexion est configuré pour recevoir des appels de services cloud d'au moins un composant de bus de terrain du réseau de bus de terrain via au moins une connexion de communication supplémentaire.

7. Dispositif de connexion selon l'une quelconque des revendications 1 à 6, **caractérisé par** au moins l'un des éléments suivants :
les services cloud sont des services cloud selon la norme WebServices ;
les services cloud comprennent au moins l'un des services suivants : création d'une entrée dans le cloud, lecture d'une entrée à partir du cloud, mise à jour d'une entrée dans le cloud, suppression d'une entrée dans le cloud ;
les services cloud comprennent des opérations CRUD pour créer, lire, mettre à jour et supprimer des entrées dans le cloud ;
le réseau de bus de terrain comprend un bus de terrain selon un protocole Ethernet industriel
le réseau de bus de terrain comprend un bus de terrain selon l'une des normes suivantes :
EtherNet/IP, Profinet, EtherCAT, Modbus TCP, HART-IP, OPC, OPC-UA ;
la première interface du dispositif de connexion est configurée pour échanger des données avec le réseau de bus de terrain au moyen de paquets de données Ethernet.

8. Dispositif de connexion selon l'une quelconque des revendications 1 à 7, **caractérisé par** au moins l'un des éléments suivants :
les données suivantes sont écrites dans le cloud par un composant de bus de terrain via le dispositif de connexion : un identifiant du composant de bus de terrain respectif, au moins une valeur de paramètre ;
un appel d'un service cloud transmis d'un composant de bus de terrain au dispositif de connexion comprend une identification du composant de bus de terrain ;
un appel d'un service cloud transmis d'un composant de bus de terrain au dispositif de connexion comprend un fabricant et un numéro de série du composant de bus de terrain ;
un appel d'un service cloud transmis d'un composant de bus de terrain au dispositif de connexion comprend au moins l'un des éléments suivants : un UUID, une adresse MAC d'une carte réseau du composant de bus de terrain, un identifiant d'une carte SIM du composant de bus de terrain.

9. Dispositif de connexion selon l'une quelconque des revendications 1 à 8, **caractérisé en ce que** le dispositif de connexion est configuré, après réception d'un appel d'un service cloud envoyé d'un composant de bus de terrain à la première interface du dispositif de connexion, pour envoyer un message d'accusé de réception via la première interface en retour au composant de bus de terrain respectif, et/ou
**en ce que** le dispositif de connexion, après réception d'un appel d'un service cloud transmis via la première interface au dispositif de connexion et après conversion de cet appel en un appel transmis au cloud via la deuxième interface, est configuré pour envoyer un message d'accusé de réception reçu du cloud via la deuxième interface au composant de bus de terrain respectif via la première interface, composant de bus de terrain dont provient l'appel du service cloud [revendication 11].

10. Dispositif de connexion selon l'une quelconque des revendications 1 à 9, **caractérisé par** au moins l'un des éléments suivants :
le dispositif de connexion est configuré pour chiffrer un appel d'un service cloud reçu via la première interface selon un chiffrement utilisé pour la transmission de données du dispositif de connexion vers le cloud ;
le dispositif de connexion est configuré pour déchiffrer un appel d'un service cloud reçu via la première interface, lequel est chiffré selon un premier chiffrement utilisé dans le réseau de bus de terrain, et pour le chiffrer selon un deuxième chiffrement utilisé pour la transmission de données du dispositif de connexion vers le cloud ;
une clé ou un certificat de chiffrement pour chiffrer des appels de services cloud qui sont transmis du dispositif de connexion au cloud est enregistré exclusivement du côté du dispositif de connexion.

11. Dispositif de connexion selon l'une quelconque des revendications 1 à 10, **caractérisé en ce que** le réseau de bus de terrain comprend un pare-feu, le pare-feu étant configuré de telle sorte que l'échange de données entre le dispositif de connexion et le cloud est autorisé, tandis que l'échange de données entre d'autres composants de bus de terrain du réseau de bus de terrain et le cloud est bloqué.

12. Réseau de bus de terrain (6), comprenant :
un bus de terrain (9),
au moins un composant de bus de terrain (8, 10, 11, 12, 13, 14) connecté au bus de terrain (9),
au moins un dispositif de connexion (17) selon l'une quelconque des revendications 1 à 2 destiné à réaliser un échange de données avec un cloud (7).

13. Réseau de bus de terrain selon la revendication 12, **caractérisé par** au moins l'un des éléments suivants :
l'au moins un composant de bus de terrain comprend au moins l'un des éléments suivants :
au moins un appareil de terrain, au moins un dispositif passerelle, au moins un autre composant de bus de terrain ;
l'au moins un composant de bus de terrain du réseau de bus de terrain est configurable de telle sorte que des appels de services cloud soient adressés à l'adresse du dispositif de connexion ;
au moins l'un des composants de bus de terrain du réseau de bus de terrain est configuré pour envoyer des appels de services cloud dirigés vers le cloud à un nom de domaine du dispositif de connexion, le nom de domaine pouvant être converti en une adresse du dispositif de connexion au moyen d'un serveur de noms ;
le réseau de bus de terrain comprend une pluralité de dispositifs de connexion agencés en cascade.

14. Réseau de bus de terrain selon la revendication 12 ou la revendication 13, **caractérisé par** au moins l'un des éléments suivants :
une pile de protocoles HTTP ou HTTPS est prévue du côté d'au moins un composant de bus de terrain et est configurée pour générer des appels de services cloud ;
une pile de protocoles HTTP ou HTTPS est prévue du côté d'au moins un composant de bus de terrain et est configurée pour générer sélectivement des appels de services cloud dirigés vers le dispositif de connexion ou directement vers le cloud ;
au moins l'un des composants de bus de terrain est configuré pour transmettre des appels de services cloud sous forme de paquets Ethernet au dispositif de connexion ;
une pile de protocoles HTTP ou HTTPS est prévue du côté du dispositif de connexion et est configurée pour traiter des appels de services cloud reçus d'un composant de bus de terrain.

15. Procédé de transmission d'appels de services cloud d'un réseau de bus de terrain (6) vers un cloud (7), dans lequel le réseau de bus de terrain (6) comprend :
un bus de terrain (9),
au moins un composant de bus de terrain (8, 10, 11, 12, 13, 14) connecté au bus de terrain (9),
un dispositif de connexion (17) comprenant une première interface (20), par l'intermédiaire de laquelle le dispositif de connexion (17) peut être connecté à au moins un composant de bus de terrain (8, 10, 11, 12, 13, 14) du réseau de bus de terrain (6), et comprenant une deuxième interface (22) pour la connexion au cloud (7), dans lequel la première interface (20) est configurée comme une interface correspondant à l'interface de programmation (19) du cloud (7), de telle sorte qu'une définition d'interface de la première interface (20) corresponde à une définition d'interface de l'interface de programmation (19) du cloud (7), de sorte que la première interface puisse être adressée par un composant de bus de terrain (8, 10, 11, 12, 13, 14) du réseau de bus de terrain (6) exactement de la même manière et avec la même syntaxe que l'interface de programmation du cloud, et
dans lequel le procédé comprend les étapes suivantes :
réception, par le dispositif de connexion (17) via la première interface (20), d'un appel d'un service cloud envoyé d'un composant de bus de terrain (8, 10, 11, 12, 13, 14) au dispositif de connexion (17),
conversion, par le dispositif de connexion (17), de l'appel d'un service cloud reçu via la première interface (20) en un appel d'un service cloud adressé au cloud (7), et transmission de l'appel d'un service cloud au cloud (7) via la deuxième interface (22),
dans lequel, pendant une période durant laquelle le cloud (7) ne peut pas être atteint, des appels de services cloud reçus via la première interface (20) sont mis en mémoire tampon par le dispositif de connexion (17) et sont envoyés au cloud (7) à un moment ultérieur lorsque le cloud (7) peut de nouveau être atteint.
